# EUROPEAN PATENT APPLICATION

(11) **EP 3 748 290 A1**
(43) Date of publication of application: **09.12.2020**
(21) Application number: 19746566.9
(22) Date of filing: 24.01.2019
(51) Int. Cl.: G01C 15/00, G01C 7/04

(54) **PERIPHERAL INFORMATION PROCESSING METHOD**

(30) Priority: 31.01.2018 JP 2018015313
(71) Applicant: Pioneer Corporation, Tokyo 113-0021 (JP)
(72) Inventor: AMANO, Katsumi, Kawagoe-shi, Saitama 350-8555 (JP); MATSUMOTO, Reiji, Kawagoe-shi, Saitama 350-8555 (JP); AOKI, Takashi, Kawagoe-shi, Saitama 350-8555 (JP); OYAMA, Kazuki, Kawagoe-shi, Saitama 350-8555 (JP); TAKAHASHI, Tetsuya, Kawagoe-shi, Saitama 350-8555 (JP); NAMBATA, Ippei, Kawagoe-shi, Saitama 350-8555 (JP)
(74) Representative: Grünecker Patent- und Rechtsanwälte PartG mbB
(86) International application number: PCT/JP2019/002283
(87) International publication number: WO 2019/151104

(57) **Abstract**

An objective of the present invention is to provide a method for processing surrounding information which enables improvement of accuracy for estimation of a current position of a moving body. The objective is achieved by detecting light transparent region information of the surrounding information acquired by a sensor 12 in a detection step, wherein the light transparent region information corresponds to a light transparent region. Further, in a generation step, information after removal is generated by removing the light transparent region information from the surrounding information. In this manner, a current position for a travelling vehicle 30 can be estimated with the information after removal. The estimation accuracy can be improved by omitting the information about the light transparent region for which the acquired information may vary.

## Description

### BACKGROUND OF THE INVENTION

### Technical Field

The present invention relates to a method for processing surrounding information.

### Background Art

Generally, a moving body, e.g. a vehicle, may be provided with a sensor for recognizing an object which exists in surroundings of the moving body. As such a moving body, a moving body with a plurality of laser radars as sensors is proposed (see e.g. Patent Document 1). According to Patent Document 1, the moving body is configured so that a road feature can be recognized as a surrounding object by scanning with a laser light.

### Citation List

### Patent Literature

Patent Document 1: JP 2011-196916 A

### SUMMARY OF THE INVENTION

Information about surroundings of the moving body (measurement vehicle) which is obtained with a method as disclosed in Patent Document 1 may be stored in a storage unit such as an external server and used for driver assistance. This means that each of moving bodies (travelling vehicles) may recognize an object in the surroundings by using a sensor individually and match it with information acquired from the storage unit in order to estimate a current position of the moving body. However, varying information about the object which is located in the surroundings of the moving body may be acquired depending on the environment at the time of measurement, even if the object is static. In this case, discrepancy may occur between the information stored previously and the newly acquired information, wherein an error may be generated in estimation of the current position.

Therefore, an example of objectives of the present invention may be to provide a method for processing surrounding information which enables improvement of accuracy for estimation of a current position of a moving body.

In order to achieve the objective described above, a method for processing surrounding information according to the present invention as defined in claim 1 includes: an acquisition step for acquiring surrounding information about an object with a sensor positioned at a moving body, the object existing in surroundings of the moving body; a detection step for detecting light transparent region information of the surrounding information which corresponds to a light transparent region; and a generation step for generating information after removal by removing at least the light transparent region information from the surrounding information.

### BRIEF DESCRIPTION OF THE DRAWINGS

Fig.1 is a block diagram schematically illustrating a driver assistance system according to an exemplar embodiment of the present invention; and
Fig.2 is a flowchart illustrating an example of processing surrounding information which is carried out by an information acquisition device of a driver assistance system according to an exemplar embodiment of the present invention.

### DETAILED DESCRIPTION OF THE PREFERRED EMBODIMENTS

Hereinafter, embodiments of the present invention will be described. A method for processing surrounding information according to an embodiment of the present invention includes an acquisition step for acquiring surrounding information about an object with a sensor positioned at a moving body, the object existing in surroundings of the moving body, a detection step for detecting light transparent region information of the surrounding information which corresponds to a light transparent region, and a generation step for generating information after removal by removing at least the light transparent region information from the surrounding information.

With such a method for processing surrounding information according to the present embodiment, a current position for each of moving bodies (e.g. travelling vehicles) can be estimated with information after removal by removing at least the light transparent region information from the surrounding information and thereby generating this information after removal. Since the light transparent region has reflectivity and/or transmittance etc. which may vary depending on the environment, such as external brightness, information to be acquired (information corresponding to the light transparent region itself, and information corresponding to an object located behind the light transparent region as seen from a sensor) may vary in case that the object is optically detected to acquire the information. The estimation accuracy can be improved by omitting the information about the light transparent region for which the acquired information may vary.

It is to be noted that the term "light transparent region" as used in the present embodiment generally means all light transparent elements which are provided along a travelling path of the moving body and e.g. at a building in the surroundings, wherein such light transparent elements may include e.g. a window glass for a building and a glass element which constitutes an entire wall of the building. It is further to be noted that material for the light transparent region is not limited to glass, but may be a resin, such as acrylic resin.

Preferably, the method for processing surrounding information further includes a transmission step for transmitting the information after removal to the outside. In this manner, it is possible to transmit the information after removal to a storage unit such as an external server and to store it as a database.

A method for processing surrounding information according to another embodiment of the present invention includes an acquisition step for acquiring surrounding information about an object from a moving body with a sensor positioned thereon, the object existing in surroundings of the moving body, a detection step for detecting light transparent region information of the surrounding information which corresponds to a light transparent region, and a generation step for generating information after removal by removing at least the light transparent region information from the surrounding information.

With such a method for processing surrounding information according to the present embodiment, current positions for moving bodies can be estimated with increased estimation accuracy by removing at least the light transparent region information from the surrounding information and thereby generating the information after removal, in a similar manner with the previous embodiment.

In the generation step, the information after removal is generated preferably by removing the light transparent region information from the surrounding information while keeping structure information unremoved, wherein the structure information corresponds to a structure other than the light transparent region, the structure being included in a building with the light transparent region. Here, structures other than the light transparent region which is included in the building may include e.g. an exterior wall and a column. In this manner, it is possible to use the information about the structure other than the light transparent region in order to estimate the current position. Further, building information of the surrounding information may be detected in the detection step, the building information corresponding to a building with the light transparent region, wherein the information after removal may be generated in the generation step by removing the building information from the surrounding information.

In the acquisition step, point cloud information may be acquired as the surrounding information. Further, a method according to the present invention may preferably include a map creation step for creating or updating map data based on the information after removal.

### Examples

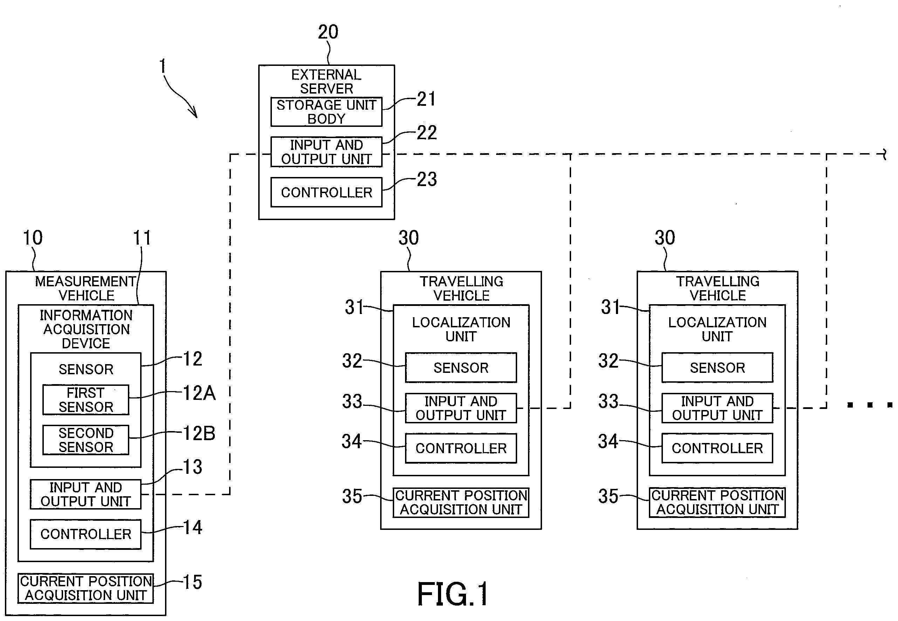

Hereinafter, exemplar embodiments of the present invention will be described in details. As shown in Fig.1, a driver assistance system 1 according to the present exemplar embodiment is configured with a measurement vehicle 10 as a moving body, an external server 20 as a storage unit, a plurality of travelling vehicles 30 as moving bodies. The driver assistance system 1 is provided so that information is collected by the measurement vehicle 10 and the collected information is stored in the external server 20, wherein current positions are estimated in the travelling vehicles 30 by using the information in the external server 20.

The measurement vehicle 10 is provided with an information acquisition device 11 for acquiring information about features as objects (path features located along a path for vehicles, and surrounding features located in the periphery of the road). The information acquisition device 11 includes a sensor 12, an input and output unit 13 and a controller 14. The measurement vehicle 10 is further provided with a current position acquisition unit 15 and configured to be capable of acquiring current positions. An example for the current position acquisition unit 15 may be a GPS receiver which receives radio waves transmitted from a plurality of GPS (Global Positioning System) satellites in a known manner.

The sensor 12 includes a first sensor 12A for recognizing a distance from a sensed target and a shape of the sensed target in details, and a second sensor 12B which is capable of recognizing the shape of the sensed target.

The first sensor 12A includes a projection unit for projecting electromagnetic waves, and a receiving unit for receiving a reflected wave of the electromagnetic waves which is reflected by an irradiated object (object existing in the surroundings of the measurement vehicle 10). For example, the first sensor 12A may be any optical sensor which projects light and receives a reflected light which is reflected by the irradiated object (so-called LIDAR (Laser Imaging Detection and Ranging)). The first sensor 12A acquires surrounding information about objects as point cloud information, the objects existing in the surroundings of the measurement vehicle 10. This means that the first sensor 12A performs scanning with electromagnetic waves and acquires point cloud information which is represented with three variables, i.e. a horizontal scanning angle θ, a vertical scanning angle ϕ, and a distance r where the object is detected.

A plurality of second sensors 12B includes at least one sensor with a polarization filter and at least one sensor without a polarization filter, wherein it is sufficient if the individual sensors are e.g. cameras. For an object located behind a light transparent region as seen from the sensors, a difference occurs between an image acquired by a sensor with a polarization filter and an image acquired by a sensor without a polarization filter. Here, the term "light transparent region" generally means all light transparent elements which are provided along a travelling path of the measurement vehicle 10 and e.g. at a building in the surroundings, wherein such light transparent elements may include e.g. a window glass for a building and a glass element which constitutes an entire wall of the building. It is further to be noted that material for the light transparent region is not limited to glass, but may be a resin, such as acrylic resin.

With regard to the first sensor 12A and second sensor 12B, it is sufficient if an appropriate number of sensors 12A and 12B is provided at appropriate locations within the measurement vehicle 10. For example, it is sufficient if the first sensors 12A are provided on a front side and a rear side of the measurement vehicle 10, wherein the second sensor 12B is provided on the rear side of the measurement vehicle 10. Furthermore, the first and second sensors 12A and 12B are configured so that a range within which the first sensor 12A acquires information includes a common portion with a range within the second sensor 12B acquires information, so that an object included in the information acquired by the first sensor 12A can be mapped with an object included in the information acquired by the second sensor 12B.

The input and output unit 13 is formed from a circuit and/or antenna for communicating with a network such as the Internet and/or a public line, wherein the input and output unit 13 communicates with the external server 20 and transmits/receives information to/from it. The input and output unit 13 may only transmit information to the external server 20.

The controller 14 is constituted from a CPU (Central Processing Unit) with a memory such as a RAM (Random Access Memory) and/or a ROM (Read Only Memory) and configured to manage the entire control of the information acquisition device 11, wherein the controller 14 processes information acquired by the sensor 12 and transmits the processed information to the outside via the input and output unit 13, as described below.

The external server 20 includes a storage unit body 21, an input and output unit 22, and a controller 23. The external server 20 is capable of communicating with the information acquisition device 11 and the travelling vehicles 30 via a network such as the Internet, and acquires information from the information acquisition device 11 and/or travelling vehicles 30 via the network. It is to be noted that the information acquisition of the external server 20 is not limited to the above configuration. For example, information may be moved manually by an operator etc. without a network from the information acquisition device 11 to the external server 20. Although in the following description, information is transmitted/received via the network for providing/receiving the information between the information acquisition device 11 and the travelling vehicles 30 as well as the external server 20, all of these are not limited to this configuration as noted above, wherein information may be provided/received manually by an operator.

The storage unit body 21 is constituted e.g. with a hard disk and/or a nonvolatile memory and configured to storage map data, wherein writing in and reading from the storage unit body 21 is performed under control of the controller 23. The map data includes feature information, wherein the feature information includes information about an object in the surroundings of the measurement vehicle 10 which is acquired by the sensor 12 of the information acquisition device 11. It is to be noted that due to a data structure for storage in the storage unit body 21, the storage unit body 21 may be configured to store the map data and the feature information separately.

The input and output unit 22 is formed from a circuit and/or antenna for communicating with a network such as the Internet and/or a public line, wherein the input and output unit 22 communicates with the information acquisition device 11 and the travelling vehicles 30 and transmits/receives information to/from them.

The controller 23 is constituted from a CPU with a memory such as a RAM and/or a ROM, and configured to manage the entire control of the external server 20.

The travelling vehicles 30 are provided with localization units 31 for estimating current positions for the travelling vehicles 30. Each of the localization units 31 is used together with a current position acquisition unit (GPS receiver) 35 which is provided in a travelling vehicle 30 associated with the localization unit 31. Each of the localization units 31 includes a sensor 32, an input and output unit 33 and a controller 34.

Each of the sensors 32 includes a projection unit for projecting electromagnetic waves, and a receiving unit for receiving a reflected wave of the electromagnetic waves which is reflected by an irradiated object (object existing in the surroundings of the travelling vehicle 30). An example for the sensor 32 may be an optical sensor which projects light and receives a reflected light which is reflected by the irradiated object. With regard to the sensor 32, it is sufficient if an appropriated number of sensors 32 is provided at appropriate locations within the travelling vehicle 30, wherein it is sufficient e.g. if at least one of the sensors 32 is provided at each of four corners of the travelling vehicle 30 in a top view.

The input and output unit 33 is formed from a circuit and/or antenna for communicating with a network such as the Internet and/or a public line, wherein the input and output unit 33 communicates with the external server 20 and transmits/receives information to/from it. The input and output unit 33 may only receive information from the external server 20. It is to be noted that receiving the information from the external server 20 is not limited to the above configuration. For example, information may be moved manually by an operator etc. without a network from the external server 20 to the localization units 31.

The controller 34 is constituted from a CPU with a memory such as a RAM and/or a ROM, and configured to manage the entire control of the localization unit 31.

In the context of the driver assistance system 1 as described above, methods for acquiring information by the information acquisition device 11, for storing the collected information by the external server 20, and for estimating the current position by the localization unit 31 using the information in the external server 20 shall be described in details individually.

### [Collecting information by the information acquisition device]

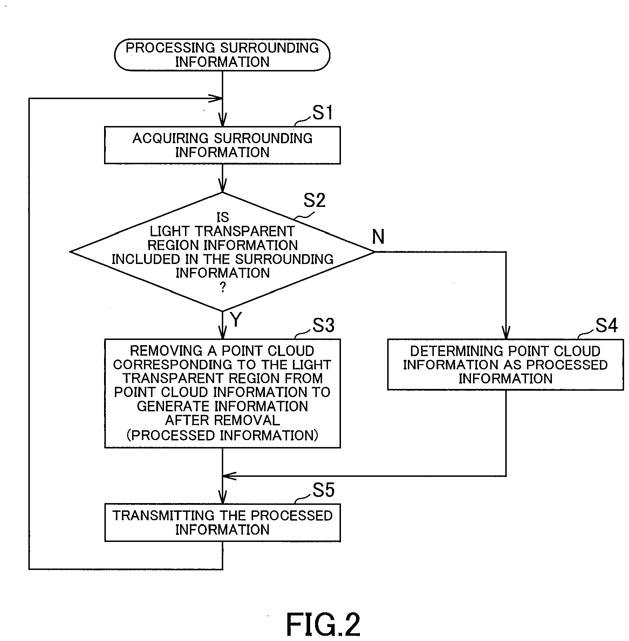

An example for processing the surrounding information which is carried out by the information acquisition device 11 shall be described with reference to Fig.2. While the measurement vehicle 10 is travelling along a road, the controller 14 processes the surrounding information. First, the controller 14 causes the sensor 12 to acquire surrounding information about an object at appropriate time intervals, the object existing in the surroundings (step S1, acquisition step). This means that the first sensor 12A is caused to acquire point cloud information, wherein the second sensor 12B is caused to acquire image information.

Next, the controller 14 determines whether the acquired surrounding informations include light transparent region information corresponding to a light transparent region (step S2). As mentioned above, due to the plurality of the second sensors 12B which includes a sensor with a polarization filter and a sensor without a polarization filter, it is possible to detect the light transparent region based on a difference between their image informations. Thus, the controller 14 detects the light transparent region information in step S2, which forms a detection step.

If the surrounding information includes the light transparent region information corresponding the light transparent region (Y in step S2), the controller 14 removes a point cloud corresponding to the light transparent region from the point cloud information acquired by the first sensor 12A in order to generate information after removal (step S3, generation step). This means that a point cloud at a position where the light transparent region exists is eliminated so that nothing exists at a position of the light transparent region and behind it as seen from the sensor 12. The processed information is determined as the information after removal. In this case, if a building with the light transparent region includes a structure other than the light transparent region (e.g. an exterior wall and/or column), a point cloud corresponding the structure (structure information) is not removed so that the structure information remains in the information after removal.

On the other hand, if the surrounding information does not include light transparent region information corresponding to a light transparent region (N in step S2), the controller 14 determines the point cloud information acquired by the first sensor 12A as the processed information (step S4). After steps S3 and S4, the controller 14 transmits the processed information to the external server 20 via the input and output unit 13 (step S5, transmission step). In step S5, the controller 14 further transmits the current position information for the measurement vehicle 10 together. After step S5, the process returns back to step S1 and the controller 14 repeats the above steps.

### [Storing information by the external server]

The external server 20 receives the processed information transmitted according to the transmission step as described above (step S5) via the input and output unit 22. The controller 23 creates the map data based on this processed information (map creation step). It is to be noted that in case that the map data has been already stored in the storage unit body 21, this map data may be updated when receiving the processed information.

### [Estimation of the current position by the localization unit]

The localization unit 31 acquires the map data from the external server 20 via the input and output unit 33 at predetermined timing. The localization unit 31 further acquires coarse information about a current position of a travelling vehicle 30 associated with the localization unit 31 from the current position acquisition unit 35. Furthermore, the localization unit 31 receives a reflected light via the sensor 32, the reflected light being reflected by a feature, wherein the localization unit 31 estimates a detailed current position for the travelling vehicle 30 by matching a distance from the feature with feature information included in the map data which is acquired from the external server 20.

Even if the sensor 32 receives a reflected light reflected by a surface of the light transparent region and/or a reflected light reflected by an object behind the light transparent region, the information will not be used for the current position estimation, since at this time the point cloud corresponding to the light transparent region has been removed from the point cloud information in the above generation step (step S3). On the other hand, when the sensor 32 receives a reflected light reflected by the structure other than the light transparent region, the information will be used for the current position estimation, since the point cloud corresponding to the structure remains in the information after removal.

With the configuration as described above, it is possible to estimate the current position for the travelling vehicle 30 with the information after removal by removing the light transparent region information from the surrounding information acquired by the sensor 12 and thereby generating the information after removal. Here, the estimation accuracy can be improved by omitting the information about the light transparent region for which the acquired information may vary.

It is to be noted that the present invention is not limited to the exemplar embodiments as described above, but includes further configurations etc. which can achieve the objective of the present invention, wherein the present invention includes variations as shown below as well.

For example, according to the previous exemplar embodiment, the controller 14 in the measurement vehicle 10 performs processing the surrounding information which includes the acquisition step, the detection step, the generation step and the transmission step. However, the controller 23 in the external server 20 may perform processing the surrounding information which includes the acquisition step, the detection step and the generation step.

This means that the controller 14 in the information acquisition device 11 may transmit the surrounding information acquired by the sensor 12 to the external server 20 without processing the surrounding information. Then, the controller 23 in the external server 20 acquires this surrounding information via the input and output unit 22 (acquisition step), detects the light transparent region information of the surrounding information which corresponds to the light transparent region (detection step), and generates the information after removal by removing the light transparent region information from the surrounding information (generation step). It is to be noted that it is sufficient if the detection step and the generation step are similar with those according to the previous exemplar embodiment.

Even in the configuration where the controller 23 in the external server 20 performs processing the surrounding information, analogously to the previous exemplar embodiment, the improved estimation accuracy can be achieved by omitting the information about the light transparent region in estimation of the current position, wherein the acquired information about the light transparent region may vary.

Further, while according to the previous exemplar embodiment the map creation step for creating or updating the map data based on the information after removal is performed by the controller 23 in the external server 20, the controller 14 in the information acquisition device 11 may perform the map creation step. This means that the information acquisition device 11 may create or update the map data and transmit this map data to the external server 20.

Furthermore, while according to the previous exemplar embodiment the transmission step is included in processing the surrounding information carried out by the controller 14, the processing may not include the transmission step. For example, the information acquisition device 11 may include a storage unit for storing the processed information, wherein data may be moved from the storage unit to the external server 20 after the measurement vehicle 10 has travelled through a predetermined area.

Moreover, while the previous exemplar embodiment is provided so that the light transparent region information is detected in the detection step and removed in the generation step, other information may be also removed in the generation step. For example, building information of the surrounding information may be detected in the detection step, the building information corresponding to a building with the light transparent region, wherein the information after removal may be generated in the generation step by removing the building information (information with the light transparent region information) from the surrounding information.

Furthermore, while according to the previous embodiment the first sensor 12A acquires the point cloud information as the surrounding information and the light transparent region is detected based on the information acquired by the plurality of second sensors 12B, wherein the information after removal is generated by removing the point cloud corresponding the light transparent region information from the point cloud information, the method for acquiring information by the sensors is not limited thereto. For example, the surrounding information may be acquired by the second sensors 12B, wherein the light transparent region may be detected based on the information acquired by the second sensors 12B.

Although the best configuration, method etc. for implementing the present invention are disclosed in the above description, the present invention is not limited thereto. Namely, while the present invention is particularly shown and described mainly with regard to the specific exemplar embodiments, the above mentioned exemplar embodiments may be modified in various manners in shape, material characteristics, amount or other detailed features without departing from the scope of the technical idea and purpose of the present invention. Therefore, the description with limited shapes, material characteristics etc. according to the above disclosure is not limiting the present invention, but merely illustrative for easier understanding the present invention so that the description using names of the elements without a part or all of the limitations to their shapes, material characteristics etc. is also included in the present invention.

### Reference Signs List

- 10: Measurement vehicle (moving body)
- 12: Sensor

## Claims

1. A method for processing surrounding information, comprising:
an acquisition step for acquiring surrounding information about an object with a sensor positioned at a moving body, the object existing in surroundings of the moving body;
a detection step for detecting light transparent region information of the surrounding information which corresponds to a light transparent region; and
a generation step for generating information after removal by removing at least the light transparent region information from the surrounding information.

2. The method for processing surrounding information according to claim 1, further comprising:
a transmission step for transmitting the information after removal to outside.

3. A method for processing surrounding information, comprising:
an acquisition step for acquiring surrounding information about an object from a moving body with a sensor positioned thereon, the object existing in surroundings of the moving body;
a detection step for detecting light transparent region information of the surrounding information which corresponds to a light transparent region; and
a generation step for generating information after removal by removing at least the light transparent region information from the surrounding information.

4. The method for processing surrounding information according to claim 1 or 3,
wherein in the detection step, structure information of the surrounding information is detected which corresponds to a structure other than the light transparent region, the structure being included in a building with the light transparent region, and
wherein in the generation step, the information after removal is generated by removing the light transparent region information from the surrounding information while keeping the structure information unremoved.

5. The method for processing surrounding information according to claim 1 or 3,
wherein building information of the surrounding information is detected in the detection step, the building information corresponding a building with the light transparent region, and
wherein the information after removal is generated in the generation step by removing the building information from the surrounding information.

6. The method for processing surrounding information according to claim 1 or 3, wherein
in the acquisition step, point cloud information is acquired as the surrounding information.

7. The method for processing surrounding information according to claim 1 or 3, further comprising:
a map creation step for creating or updating map data based on the information after removal.
